## Europäisches Patentamt

(19) **European Patent Office**

**Office européen des brevets**

(11) Veröffentlichungsnummer: **0 100 330**
**B1**

(12) # EUROPÄISCHE PATENTSCHRIFT

(45) Veröffentlichungstag der Patentschrift:
**27.08.86**

(51) Int. Cl.⁴: **F 16 K 39/02,** F 16 K 11/10,
F 15 B 13/04

(21) Anmeldenummer: **83900489.2**

(22) Anmeldetag: **01.02.83**

(86) Internationale Anmeldenummer:
**PCT/EP 83/00023**

(87) Internationale Veröffentlichungsnummer:
**WO 83/02813 (18.08.83** Gazette 83/19)

(54) **HYDRAULIKSTEUERGERÄT.**

(30) Priorität: **04.02.82 AT 423/82**

(43) Veröffentlichungstag der Anmeldung:
**15.02.84 Patentblatt 84/7**

(45) Bekanntmachung des Hinweises auf die Patenterteilung:
**27.08.86 Patentblatt 86/35**

(84) Benannte Vertragsstaaten:
**AT BE CH DE FR GB LI LU NL SE**

(56) Entgegenhaltungen:
**AT - B - 337 509**
**DE - A - 2 928 015**
**DE - B - 1 296 909**
**DE - U - 7 817 627**
**FR - A - 2 088 976**
**GB - A - 1 009 729**
**US - A - 2 503 827**
**US - A - 3 153 528**

(73) Patentinhaber: **Compat Aktiengesellschaft,
Aeulestrasse 74, FL-9490 Vaduz (LI)**

(72) Erfinder: **Sauder, Karl, Altstetterstrasse 208,
CH-8048 Zürich (CH)**

(74) Vertreter: **Hefel, Herbert, Dipl.-Ing., Egelseestrasse 65a
Postfach 61, A-6800 Feldkirch (AT)**

## Beschreibung

Die Erfindung betrifft ein Hydrauliksteuergerät mit einem Gehäuse und einem in einer Gehäusebohrung verschiebbaren Steuerschieber, wobei in der Gehäusebohrung mit axialem Abstand zueinander zwei Ventilsitze ausgebildet sind, sowie mehreren in Abhängigkeit von der Stellung des Steuerschiebers miteinander verbindbaren oder gegenseitig absperrbaren Anschlussleitungen, wobei in einem zwischen einem Abschnitt der Gehäusebohrung und dem Steuerschieber gebildeten ringförmigen Raum ein koaxial zum Steuerschieber angeordneter und an diesem verschiebbar geführter Steuerring vorgesehen ist, welcher an seinen Endbereichen Passflächen zu den Ventilsitzen an der Gehäusebohrung aufweist, und wobei am Steuerschieber zwei mit axialem Abstand zueinander ausgebildete Ventilsitze vorgesehen sind und der Steuerring an seinen Endbereichen Passflächen zu diesen Steuerschieber-Ventilsitzen aufweist, wobei ferner zwischen den beiden Steuerschieber-Ventilsitzen unmittelbar an die Ventilsitze anschliessende und zu einem axial im Steuerschieber verlaufenden Kanal geführte Verbindungsöffnungen vorgesehen sind, und je eine Anschlussleitung in den Ringraum zwischen den beiden Ventilsitzen in der Gehäusebohrung und beidseitig ausserhalb dieser Ventilsitze in Ringräume zwischen der Gehäusebohrung und dem Steuerschieber sowie zu dem Kanal im Steuerschieber einmündet (DE-B-1 296 909).

Durch Wegeventile werden Start, Stop sowie die Fliessrichtung eines Druckmediums gesteuert und damit im Endeffekt die Bewegungsrichtung oder Halteposition eines Verbrauchers (Zylinder oder Hydromotor) bestimmt. Wegeventile kann man von ihrer Bauart her in zwei Gruppen unterteilen, einerseits in die Wege-Sitzventile und andererseits in die Wege-Schieberventile. Wege-Sitzventile unterscheiden sich grundsätzlich von den Wege-Schieberventilen durch die Eigenschaft der lecköfreien Absperrung, die ja bei Schieberventilen aufgrund des erforderlichen Passungsspiels zwischen Kolben und Gehäuse nicht zu erreichen ist. Das Sitzelement ist in der Regel eine Kugel, die in einer Ausgangsstellung durch eine Feder auf einen Ventilsitz gedrückt wird. Solche Ventile können für Drücke bis 700 bar, jedoch nur bei kleinen Bauarten (bis 6 mm Nenndurchmesser), eingesetzt werden. Bei mehreren Durchflusswegen und mehreren Schaltstellungen müssen auch mehrere Ventilkugeln vorgesehen werden. Bei mehreren Durchflusswegen werden daher in der Regel mehrere Wege-Sitzventile entsprechend zusammengebaut. Solche Sitzventile sind daher nur bis zu einem bestimmten Durchmesser der Ventilsitze und somit der Steuerschieber einzusetzen, da ansonsten die notwendige Umschaltkraft, die entgegen dem herrschenden Hydraulikdruck erfolgen muss, zu gross wird.

Das am häufigsten verwendete Prinzip von Wegeventilen ist das Wege-Schieberventil. Die Vorteile dieser Ausgestaltung liegen in der relativ einfachen konstruktiven Gestaltung, in einer relativ hohen Schaltleistung und besonders in einer Vielzahl von Steuerfunktionen. Es ist dabei ein Steuerschieber in einer Gehäusebohrung verschiebbar gehalten, wobei dieser Steuerschieber in den verschiedenen Stellungen die Anschlussleitungen abdeckt oder freigibt. Hydrauliksteuergeräte in Form von Schieberventilen können aber nur bis zu einem maximalen Druck von 350 bar eingesetzt werden.

Es ist bereits ein direktmagnetbetätigtes Sitzventil in 2/2- und 3/2-Wege-Ausführung bekannt geworden (DE-U-78 17 627), bei welchem in einer Gehäusebohrung zwei mit Abstand voneinander angeordnete Ventilsitze vorgesehen sind, wobei ein Steuerschieber die Ventilkörper bildet und je nach erforderlichen Durchgangswegen die Ventilkörper an den entsprechenden Ventilsitzen zur Anlage kommen. Der Schliessdruck dieser Ventile wird durch Einwirkung des Hydraulikdrucks erhöht, wobei jedoch dieser zusätzliche Druck beim Umschalten des Ventils ebenfalls entgegenwirkt. Um hier einen gewissen Ausgleich zu schaffen, müssen Gegendrücke aufgebaut werden, was dadurch erreicht werden kann, dass der Hydraulikdruck auch zu den gegenüberliegenden Enden des Steuerschiebers geführt wird. Durch solche Sitzventile werden durch diese zwei Schaltstellungen in der Regel zwei und maximal drei Strömungsrichtungen ermöglicht.

Ferner ist ein Mehrwegeventil bekannt geworden (DE-B-12 96 909), bei welchem auf dem Steuerschieber ein Steuerring in axialer Richtung bewegbar gehalten ist. Sowohl die Ventilsitze als auch die Passflächen an dem Steuerring sind in radial ausgerichteten Ebenen angeordnet, so dass stets eine relativ grossflächige Anlage gegeben ist. Durch solche grossflächige Anlagen ist eine schlechte Abdichtung insbesondere bei sehr hohen Drücken gegeben. Bei einem Druckmedium kommt es relativ oft vor, dass geringe Verunreinigungen eingeschlossen sind, wobei bei derartigen Passflächen kleinste Teile, die zwischen die abzudichtenden Bereiche gelangen, eine Undichtheit hervorrufen. Es ist daher bei einer solchen Anordnung unbedingt erforderlich, dass die Seitenflächen des Steuerrings, hier bei dieser bekannten Ausführung die beiden seitlichen Ringteile, aus einem elastisch nachgiebigem Material gefertigt werden. Dadurch ist aber die Gefahr gegeben, dass durch Abnutzung der Passflächen die ordnungsgemässe Dichtheit wiederum nicht gegeben ist. Ausserdem eignet sich eine solche Abdichtung mit elastisch nachgiebigen Teilen nicht für hohe Drücke.

Solcherart ausgebildete Ventile sind daher für einen maximalen Druck bis etwa 35 bar geeignet. Für Drücke von 1000 bar oder darüber sind die Abdichtungsprobleme wesentlich grösser, wobei dann insbesondere die Abdichtungsanschläge an dem Steuerschieber sehr klein gehalten sind, um dadurch überhaupt mit relativ geringem Kraftaufwand den Steuerschieber verschieben zu können.

Bei einer solchen Ausführung wird es insbesondere auch deswegen Schwierigkeiten mit den Passflächen geben, weil praktisch bei jeder Ventilschaltung eine andere Fläche zum Einsatz kommt, zumal dieser Steuerring nicht exakt auf dem Steuerschieber geführt ist, sondern sich in radialer Richtung geringfügig bewegen kann. Es ist also zwischen dem Steuerring und der Oberfläche des Steuerschiebers ein relativ grosses Spiel vorhanden.

Die vorliegende Erfindung hat sich zur Aufgabe gestellt, ein Hydrauliksteuergerät zu schaffen, bei welchem die Vorteile von Schieberventilen mit jenen der Sitzventile optimal vereinigt werden können, so dass also auch sehr grosse Drücke unabhängig von der Baugrösse bewältigt werden können und ausserdem die erforderliche Umschaltkraft druckunabhängig wird.

Erfindungsgemäss wird hierzu vorgeschlagen, dass der Steuerring an seinen Endbereichen äussere kegelförmige Passflächen und innere trichterförmige Passflächen aufweist, dass die äusseren Passflächen flächenmässig grösser sind als die inneren Passflächen am Steuerring, dass der Abstand der Ventilsitze am Steuerschieber grösser ist als der Abstand der Ventilsitze in der Gehäusebohrung, wobei die Länge des Steuerringes kleiner ist als der Abstand der beiden Ventilsitze am Steuerschieber, dass die Ventilsitze an der Gehäusebohrung und am Steuerschieber von in axialer Richtung verlaufenden Zylinderflächen und Radialebenen begrenzt sind, und dass zwischen den beiden Steuerschieber-Ventilsitzen unmittelbar an die Ventilsitze im Verschiebebereich des Steuerringes anschliessende und zu dem axial im Steuerschieber verlaufenden Kanal geführte Verbindungsöffnungen vorgesehen sind.

Erst durch die Massnahmen der vorliegenden Erfindung wird eine ordnungsgemässe Abdichtung auch bei hohen Drücken und auch bei einer Vielzahl von Umschaltungen gewährleistet. Gerade durch die linienförmige Berührung der Sitzflächen mit den Ventilsitzen kann auch nicht eine Undichtheit durch eventuell eindringende Verschmutzung hervorgerufen werden. Durch die besondere Anordnung der Verbindungsöffnungen zum Kanal im Steuerschieber wird erreicht, dass der Durchmesserunterschied zwischen dem Führungsbereich des Steuerringes und den Ventilsitzen am Steuerschieber gering gehalten werden kann, und dass ausserdem die Ventilsitze die notwendige Stabilität aufweisen, da sie nicht, wie bei der bekannten Ausführung, über einen relativ grossen Bereich frei auskragend ausgebildet werden müssen und daher auch stets einstückig mit dem angrenzenden Teil des Steuerschiebers ausgeführt werden können. Durch die geringstmöglichen Durchmesserunterschiede ist auch eine relativ kleine Bauweise des Steuerschiebers samt des Steuerringes trotz der erforderlichen Ventilsitze am Steuerschieber möglich.

Durch die erfindungsgemässen Massnahmen, dass nämlich die Länge des Steuerringes kleiner ist als der Abstand der beiden Ventilsitze am Steuerschieber und dass der Abstand der Ventilsitze am Steuerschieber grösser ist als der Abstand der Ventilsitze in der Gehäusebohrung, ist die Gewähr gegeben, dass in dem freigegebenen Bereich zwischen dem Steuerring und dem Ventilsitz am Steuerschieber wenigstens die gleich grosse Durchflussöffnung frei bleibt wie im Bereich zwischen dem Steuerring und dem betreffenden Ventilsitz am Gehäuse. Ein wesentlicher Unterschied zwischen der bekannten Ausführung und der vorliegenden Erfindung ist aber auch darin zu sehen, dass jeweils Dichtkanten gebildet werden und nicht, wie bei der bekannten Ausführung, Dichtflächen, da solche Dichtflächen keine sichere Abdichtung bei hohen Drücken gewährleisten. Ausserdem können sowohl die Ventilsitze als auch die entsprechenden Passflächen am Steuerring aus geeignetem, nicht flexiblem Material gefertigt werden, um dadurch die notwendigen Anpressdrücke ohne weiteres übertragen zu können. Bei Anordnung flexibler Dichtungen ergeben sich immer wieder Probleme bei grossen Drücken. Bei Passflächen aus flexiblem Material ergibt sich in diesem Material ein Kaltfluss, so dass nach jedem Dichtungsvorgang der Ventilweg grösser wird, um wiederum eine Abdichtung zu erreichen. Es ist daher mit solchen Ausführungen gar nicht möglich, diese bei hohen Drücken einzusetzen, wie dies eben bei einer Konstruktion gemäss der vorliegenden Erfindung der Fall ist.

Durch die erfindungsgemässen Massnahmen wird ausserdem erreicht, dass einerseits der vorgesehene Steuerring wohl durch den Druck des durchgeführten Mediums in der entsprechenden Schliessstellung gehalten wird, dass jedoch die Umschaltung des Hydrauliksteuergerätes in eine andere Schaltstellung druckunabhängig erfolgen kann. Auf den Steuerschieber selbst wirken keine vom durchgeführten Medium ausgehenden Druckkräfte in axialer Richtung ein, so dass zum Verstellen dieses Steuerschiebers lediglich zumindest in der einen Verschieberrichtung die geringfügige Kraft einer eventuell vorhandenen Druckfeder bzw. die Anpresskraft der Dichtungen überwunden werden muss. Sobald aber der Steuerschieber geringfügig bewegt wird, wird zwischen der entsprechenden inneren Passfläche des Steuerringes und dem zugeordneten Ventilsitz am Steuerschieber ein Ringspalt geöffnet, so dass der Druck sofort abgebaut wird bzw. es herrscht dann zu beiden Seiten des Steuerringes der gleiche Druck, so dass bei einem weiteren Verstellen des Steuerschiebers der Steuerring ohne zusätzlichen Kraftaufwand mitgeschoben werden kann, bis dieser wiederum in der gegenüberliegenden Schaltstellung anlangt.

Es werden durch die Erfindung also Sitzventile geschaffen, bei welchen die Umschaltkraft druckunabhängig ist, so dass solche Hydrauliksteuergeräte auch bei entsprechend grossem Durchmesser der Gehäusebohrung und des Steuerschiebers und somit bei grossen Durchflussmengen eingesetzt werden können. Trotzdem werden jedoch die Vorteile eines Schieberventils erreicht, indem nämlich ein 4/2-Wege-Ventil, also ein Ventil mit vier Strömungsrichtungen und zwei Schaltstellungen, geschaffen werden kann. Ein solches Hydrauliksteuergerät ist für sehr hohe Drücke unabhängig von der Baugrösse geeignet, wogegen Sitzventile üblicher Bauart nur für hohe Drücke bei kleinem Nenndurchmesser geeignet sind. Bei Schieberventilen sind solch hohe Drücke nicht zu bewältigen.

Trotz relativ einfacher konstruktiver Massnahmen kann also ein Hydrauliksteuergerät geschaffen werden, welches druckunabhängig schaltbar ist und welches für sehr hohe Drücke und auch für grosse Durchlässe eingesetzt werden kann.

Die vorliegende Erfindung bringt also gegenüber den bekannten Ausführungen einen wesentlichen Fortschritt, da trotz einfachen konstruktiven Aufbaues und einfacher und druckunabhängiger Schaltvorgänge ein Einsatz für höchste Drücke und bei kleinen und grössten Durchlässen möglich ist.

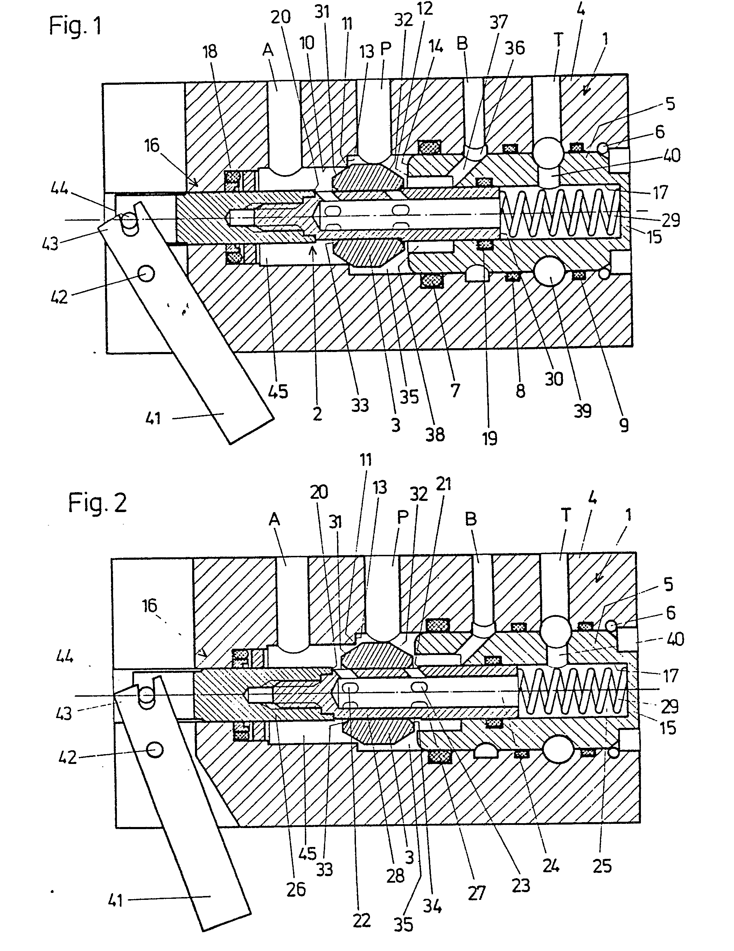

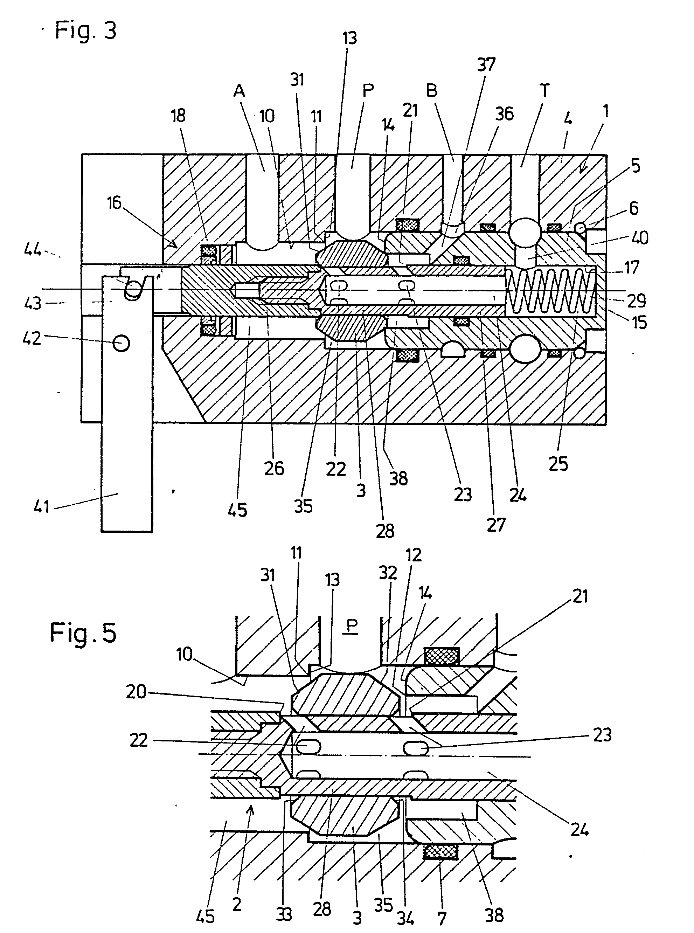

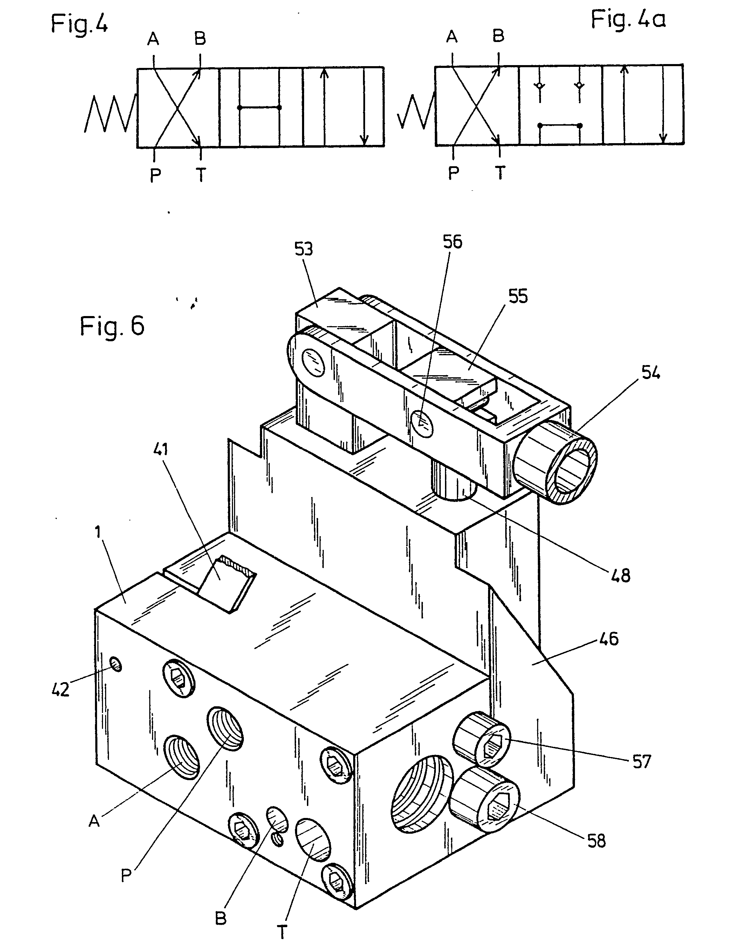

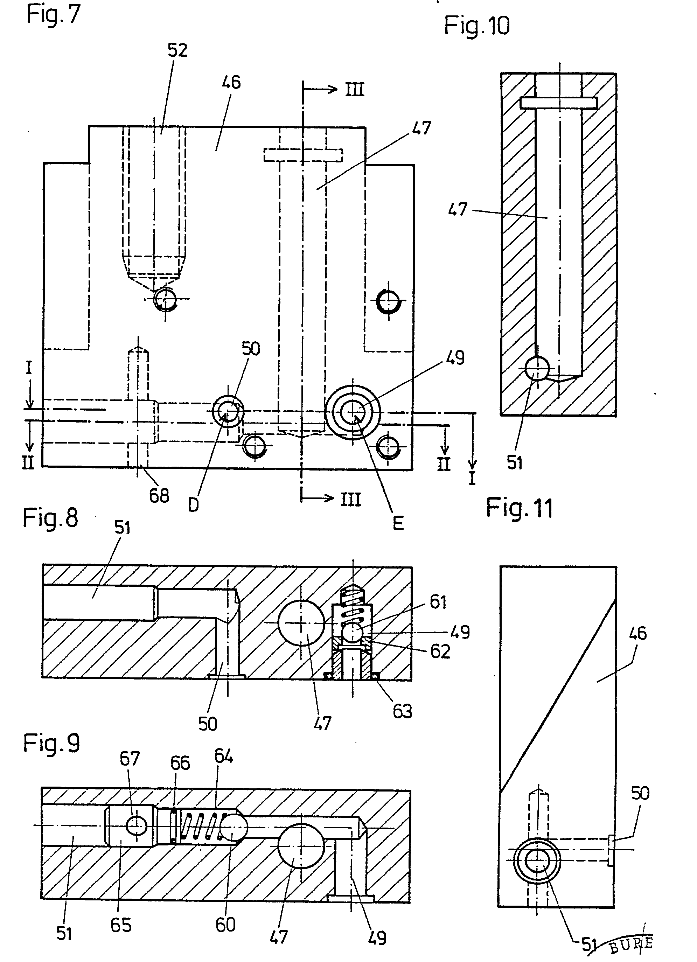

Einzelheiten der Erfindung werden in der nachstehenden Beschreibung anhand der Zeichnungen noch näher erläutert. Es zeigen: Die Fig. 1 bis 3 Horizontalschnitte durch ein erfindungsgemässes Hydrauliksteuergerät; die Fig. 4 und 4a schematische Darstellungen der möglichen Durchlaufwege durch das Hydrauliksteuergerät; Fig. 5 eine gegenüber den Fig. 1–3 vergrösserte Darstellung des den Steuerring umgebenden Bereiches; Fig. 6 eine Schrägsicht des Ventilgehäuses mit angebauter Handpumpe; Fig. 7 eine Ansicht des Pumpengehäuses; die Fig. 8 bis 10 Schnitte nach den Linien I–I, II–II und III–III in Fig. 7; Fig. 11 eine Seitenansicht des Pumpengehäuses.

Das Hydrauliksteuergerät besteht im wesentlichen aus einem Gehäuse 1, einem Steuerschieber 2, einem Steuerring 3, sowie den Anschlussleitungen A, P, B und T.

Das Gehäuse 1 ist zweiteilig ausgeführt und besteht aus einem Grundkörper 4 sowie einem rohrförmigen Einsatz 5, wobei diese Massnahme aus konstruktiven Gründen erforderlich ist. Dieser Einsatz 5 ist im Grundkörper 4 festsitzend angeordnet, wobei zur verschiebesicheren Lage ein Sicherungsring 6 eingesetzt ist. Zwischen dem Grundkörper 4 und dem Einsatz 5 sind mehrere Dichtungsringe 7, 8 und 9 bzw. -packungen eingefügt. Das aus dem Grundkörper 4 und dem Einsatz 5 gebildete Gehäuse 1 schliesst eine Gehäusebohrung 10 ein, die mehrfach abgesetzt ist. An dieser Gehäusebohrung 10 sind zwei mit axialem Abstand voneinander angeordnete Ventilsitze 11 und 12 vorgesehen, wobei hier ebenfalls wieder aus Gründen der einfacheren Konstruktion der Ventilsitz 11 von dem Grundkörper 4 des Gehäuses 1 und der Ventilsitz 12 vom Einsatz 5 gebildet werden. Damit für den Einsatz 5 eine ausreichende Wandstärke verbleibt, weisen die beiden Ventilsitze 11 und 12 unterschiedliche Durchmesser auf, doch wäre es durchaus denkbar, dass diese beiden Ventilsitze 11 und 12 mit dem gleichen Durchmesser ausgeführt sind. Die Ventilsitze 11 und 12 werden also bei dieser Ausführung von in axialer Richtung verlaufenden Zylinderflächen, welche von der Gehäusebohrung 10 gebildet werden, und Radialebenen 13 und 14 begrenzt. Es ergeben sich dadurch entsprechend scharfkantige Ventilsitze.

Der Einsatz 5 des Gehäuses 1 ist mit einem geschlossenen Boden 15 ausgeführt, so dass das Gehäuse 1 nach aussen hin abgeschlossen ist.

Der Steuerschieber 2 ist in dem Gehäuse 1 axial verschiebbar, wobei dieser in einem vorderen Abschnitt 16 des Grundkörpers 1 und in der Bohrung 17 des Einsatzes 5 geführt ist. Zur Abdichtung an den Endbereichen des Steuerschiebers sind auch hier Dichtungsringe 18 und 19 eingesetzt. An diesem Steuerschieber 2 sind mit axialem Abstand voneinander zwei Ventilsitze 20 und 21 vorgesehen, welche einerseits von der Mantelfläche des Steuerschiebers und andererseits von radial nach innen geführten Radialflächen begrenzt sind. Zwischen diesen beiden Ventilsitzen 20 und 21 sind Verbindungsöffnungen 22 und 23 vorgesehen, die zu einem in axialer Richtung innerhalb des Steuerschiebers 2 verlaufenden Kanal 24 führen. Dieser Kanal 24 ist zum einen Ende des Steuerschiebers hin offen ausgebildet und mündet dort in einen vom Einsatz 5 eingeschlossenen Raum 25.

Wie aus der Zeichnung ersichtlich ist, ist der Abstand der Ventilsitze 20, 21 am Steuerschieber 2 grösser als der Abstand der Ventilsitze 11 und 12 in der Gehäusebohrung 10. Es ist dadurch ein grösserer Verschiebeweg des Steuerschiebers trotz einem kleinen Verschiebeweg des Steuerringes 3 möglich, wobei trotzdem bei den jeweiligen Endstellungen eine ausreichende Durchflussmöglichkeit des Mediums durch die Verbindungsöffnungen 22 bzw. 23 gegeben ist.

Der Steuerschieber 2 wird aus zwei in axialer Richtung aufeinanderfolgenden und miteinander fest verbundenen Bauteilen 26 und 27 gebildet, wobei jeder Bauteil 26 und 27 einen der beiden Ventilsitze 20 und 21 aufweist. In konstruktiv einfacher Weise kann dadurch zwischen den beiden Ventilsitzen 20 und 21 ein Abschnitt 28 mit gegenüber dem übrigen Bereich des Steuerschiebers 2 geringeren Durchmesser geschaffen werden. Es können dadurch nicht nur in einfacher Weise die Ventilsitze 20 und 21 hergestellt werden, sondern auch die Führung für den verschiebbaren Steuerring 3. Die Verbindung der beiden Bauteile 26 und 27 erfolgt in einfacher Weise durch eine Verschraubung, wobei beim gezeigten Ausführungsbeispiel das Ende des Bauteiles 27 mit einem Gewindebolzen und das korrespondierende Ende des Bauteiles 26 mit einer Gewindebohrung ausgeführt ist. Durch gegenseitige Zentrierflächen sind die beiden Bauteile 26 und 27 exakt gegeneinander ausgerichtet.

Im Rahmen der Erfindung ist es möglich, dass der betätigungsseitige Bauteil 26 des Steuerschiebers 2 zu seinem steuerringseitigen Ende hin konisch erweitert ist. Es kann sich hier um eine sehr kleine Konizität handeln, wobei beispielsweise der Durchmesserunterschied auf eine Länge von ca. 1 cm annähernd 0,1 mm beträgt. Dadurch kann die eine Schliessstellung des Steuerringes und des Steuerschiebers durch den Hydraulikdruck unterstützt werden, da ja in dieser Richtung der Steuerschieber entgegen der Kraft der Feder 29 in Einsatzstellung gehalten werden muss. Es wird hier also die Halteposition durch den Hydraulikdruck unterstützt, wobei mit der Konizität so weit gegangen werden kann, dass praktisch die Federkraft aufgehoben oder die Kraft auf den Steuerschieber etwas grösser ist als die entgegenwirkende Federkraft. Es wird dann lediglich zum Lösen des Ventils bzw. zum Umschalten in die andere Stellung ein geringfügiger Anstoss benötigt. Trotzdem wirkt dann die Feder 29 in der anderen Schaltstellung entsprechend stark.

Bei einer Betätigung durch einen Elektromagneten kann selbstverständlich die Feder 29 auch wegfallen, da die nötige Umschaltkraft durch diese Elektromagnete bewerkstelligt wird. Damit nach beiden Richtungen hin ein entsprechender Anpressdruck an die Ventilsitze gewährleistet ist, besteht daher die Möglichkeit, dass die zu beiden Seiten an die Ventilsitze 20 und 21 anschliessenden Bereiche zumindest über einen kurzen Abschnitt sich konisch zum jeweiligen Ende des Steuerschiebers 2 hin verjüngen. Auch hier kann wieder vorgesehen werden, dass der Durchmesserunterschied auf eine Länge von z.B. 1 cm annähernd 0,1 mm beträgt. Die entsprechend dickeren Bereiche des Steuerschiebers 2 können dann direkt in die Ventilsitze 20, 21 übergehen. Es ist dadurch gewährleistet, dass in beiden Endstellungen des Steuerschiebers und damit auch des Steuerringes ein entsprechender Schliessdruck vorhanden ist. Um entgegen diesem Schliessdruck den Steuerschieber zu verstellen, benötigt es lediglich geringfügige Kräfte, die z.B. leicht von einem Elektromagneten oder von Hand aufgebracht werden können.

Im Rahmen der Erfindung ist es aber auch möglich, dass unmittelbar im Bereich eines Ventilsitzes 20 oder 21 oder auch bei beiden Ventilsitzen 20 und 21 ein Bund anschliesst, welcher gegenüber dem Steuerschieber 2 einen geringfügig grösseren Durchmesser aufweist. Auch dadurch kann ein geringer Schliessdruck erreicht werden, welcher jedoch wiederum entsprechend einfach überwunden werden kann, bei notwendigen Schaltvorgängen.

In dem Raum 25 innerhalb des Einsatzes 5 ist eine Druckfeder 29 eingesetzt, welche sich einerseits am Boden 15 des Einsatzes 5 und andererseits an der Endfläche 30 des Steuerschiebers 2 abstützt. Der Steuerschieber 2 wird dadurch federbelastet in der in Fig. 1 dargestellten Lage gehalten. Bei einem Umschalten des Hydrauliksteuergerätes muss daher lediglich die Kraft dieser Feder 29 überwunden werden.

Der Steuerring 3, welcher auf dem Abschnitt 28 des Steuerschiebers 2 verschiebbar gehalten ist, umschliesst koaxial den Steuerschieber 2 und ist mit äusseren Passflächen 31 und 32 sowie mit inneren Passflächen 33 und 34 ausgeführt, welche mit den entsprechenden Ventilsitzen 11 und 12 bzw. 20 und 21 zusammenwirken. Diese Passflächen 31 und 34 sind an den Endbereichen dieses Steuerringes 3 ausgebildet, wobei die äusseren Passflächen 31 und 32 kegelförmig und die inneren Passflächen 33 und 34 trichterförmig ausgeführt sind. Es wird dadurch ein satter Abschluss zwischen den Ventilsitzen und den Passflächen erreicht, so dass auch sehr hohe Drücke sicher abgesperrt werden können.

Die äusseren Passflächen 31 und 32 sind flächenmässig grösser ausgeführt als die inneren Passflächen 33 und 34, so dass dieser Steuerring 3 als symmetrischer Drehteil ausgeführt werden kann, obwohl die beiden Ventilsitze 11 und 12 einen unterschiedlichen Durchmesser aufweisen. Ferner ist die Länge des Steuerringes 3 in axialer Richtung gesehen kleiner als der Abstand der beiden Ventilsitze 20 und 21 am Steuerschieber 2, jedoch grösser als der Abstand der beiden Ventilsitze 11 und 12 an der Gehäusebohrung 10. Infolge des grösseren Durchmessers ergeben sich an den äusseren Ventilsitzen 11 und 12 bei geöffnetem Durchgang grössere Durchtrittsflächen, so dass dadurch eine geringere Verschiebung erforderlich ist. Ausserdem ist der Verschiebebereich auf dem Steuerschieber deshalb grösser gewählt, um dadurch eine genügende Öffnung der Durchgangsöffnungen 22 zum Kanal 24 zu erreichen.

Der Steuerring 3 ist also in einen zwischen der Gehäusebohrung 10 und dem Steuerschieber 2 verbleibenden Ringraum 35 eingesetzt, wobei durch die Anordnung eines solchen Ringraumes 35 sowie weiterer Ringräume 38, 45 einfache Möglichkeiten zur Zuleitung der Anschlussleitungen A, P, B und T gegeben sind. Die Anschlussleitung P, durch welche das Druckmedium zugeführt wird, mündet im Bereich zwischen den beiden Ventilsitzen 11 und 12 in den Ringraum 35 ein. Beidseitig ausserhalb dieser Ventilsitze 11 und 12 münden die Anschlussleitungen A und B ein, wobei die Anschlussleitung A in den Ringraum 45 mündet und die Anschlussleitung B über einen Ringkanal 36 und Verbindungskanäle 37 dem zwischen dem Steuerschieber 2 und dem Einsatz 5 freigelassenen Ringraum 38 zugeführt wird. Die Anschlussleitung T, welche als Rücklaufleitung zu einem Vorratstank dient, mündet über einen Ringkanal 39 und eine oder mehrere radiale Zuführöffnungen 40 in den Raum 25 innerhalb des Einsatzes 5 und ist somit mit dem Kanal 24 innerhalb des Steuerschiebers 2 in Verbindung.

In der vorstehenden Beschreibung wurde erwähnt, dass die Ventilsitze 11 und 12 bzw. 20 und 21 scharfkantige Abschnitte darstellen. Selbstverständlich ist es möglich, hier eine geringe Anfasung vorzusehen.

Die Verstellung des Steuerschiebers 2 erfolgt beim gezeigten Ausführungsbeispiel durch einen Handhebel 41, welcher am Gehäuse 1 um die Achse 42 drehbar gelagert ist. Der eine Arm 43 des Hebels 41 umfasst einen Bolzen 44 am freien Endbereich des Steuerschiebers 2.

Anhand der Fig. 4 ist ersichtlich, dass das erfindungsgemässe Hydrauliksteuergerät ein 4/2-Wege-Ventil darstellt, wobei in dieser Figur schematisch die einzelnen Schaltstellungen ersichtlich sind. Es besteht also die Möglichkeit, die Anschlussleitung P mit der Anschlussleitung B zu verbinden und gleichzeitig die Anschlussleitung A mit der Anschlussleitung T. Ferner besteht die Möglichkeit, in einer Zwischenstellung sämtliche vier Anschlussleitungen A, B, P, T untereinander zu verbinden. In der zweiten Schaltstellung sind dann die Anschlussleitungen A und P sowie B und T jeweils miteinander verbunden.

Der Arbeitsablauf und die einzelnen Stellungen des Hydrauliksteuergerätes werden nun noch anhand der Fig. 1 bis 3 näher erläutert. Durch ein solches Hydrauliksteuergerät kann beispielsweise ein Hydraulikkolben angesteuert werden, welcher nach beiden Richtungen durch das Druckmedium verstellt werden muss. Es ist daher erforderlich, einerseits den Druck zu der einen Seite des Hydraulikkolbens zuzuführen und andererseits das Hydraulikmedium von der gegenüberliegenden Seite des Hydraulikkolbens abzuführen. Bei der Gegenbewegung des Hydraulikkolbens sind dann in umgekehrter Richtung die Zuführung die Ableitung erforderlich.

Bei der Stellung nach Fig. 1 liegt der Steuerring 3 mit seiner Passfläche 31 am Ventilsitz 11 und mit seiner Passfläche 34 am Ventilsitz 21 an. Der Steuerschieber 2 ist in seiner durch die Feder 29 hervorgerufenen Ruhestellung. In dieser Stellung des Steuerschiebers 2 und des Steuerringes 3 kann das durch die Anschlussleitung P zugeführte Druckmedium entlang der Aussenseite des Steuerringes 3 dem Ringraum 38 zugeführt werden, von wo es über die Verbindungskanäle 37 und den Ringkanal 36 zur Anschlussleitung B gelangt. Gleichzeitig ist in dieser Stellung die Anschlussleitung A mit der Anschlussleitung T verbunden und zwar von der Anschlussleitung A ausgehend über den Ringraum 45, die Verbindungsöffnung 22, den Kanal 24, den Raum 25, die Zuführöffnung 40 und den Ringkanal 39, so dass das rückgeführte Medium wiederum in den Vorratstank zurückgeführt werden kann. Die Anlage des Steuerrings 3 an den beiden Ventilsitzen 11 und 21 wird durch die Feder 29 bewirkt und ausserdem durch die in axialer Richtung auf den Steuerring 3 einwirkende Kraft des Druckmediums unterstützt.

Soll nun ein Umschalten des Hydrauliksteuergerätes erfolgen, kann durch Betätigung des Handhebels 41 der Steuerschieber 2 in axialer Richtung verstellt werden, wobei durch die besondere erfindungsgemässe Konstruktion dieses Verschieben druckunabhängig erfolgen kann, d.h. auf die Verschiebebewegung des Steuerschiebers 2 wirkt keine axiale Kraft durch das Druckmedium ein. Sobald der Steuerschieber 2 ein entsprechendes Stück weiterbewegt wird, entfernt sich der Ventilsitz 21 von der Passfläche 34 des Steuerringes 3, so dass durch die Verbindungsöffnungen 23 eine sofortige Druckentlastung des durch die Anschlussleitung P zugeführten Druckmediums erfolgt, da eine Verbindung zur drucklosen Anschlussleitung T geschaffen wird. Diese Stellung ist in Fig. 2 gezeigt, wo also alle Anschlussleitungen A, P, B und T miteinander in Verbindung stehen.

Durch Weiterbewegen des Steuerschiebers 2 gelangt dann der Ventilsitz 20 zur Anlage an der Passfläche 33 des Steuerringes 3, so dass dieser in Verstellrichtung des Steuerschiebers 2 mitgenommen wird, bis dieser dann mit seiner Passfläche 32 an dem Ventilsitz 12 zur Anlage kommt. In dieser Stellung ist dann die Anschlussleitung P mit der Anschlussleitung A verbunden und durch die Anschlussleitung B kann das rückgeförderte Druckmedium zur Anschlussleitung T und somit zum Vorratstank geführt werden. Der nunmehr im Bereich der Anschlussleitungen P und A sowie in den Ringräumen 35 und 45 aufgebaute Druck unterstützt die Schliessbewegung des Steuerringes 3, wobei jedoch der Handhebel 41 in dieser Stellung gehalten werden muss. Für kurzfristige Schaltungen ist dies aber ohne weiteres möglich, da ja allein nur die Kraft der Feder 29 überwunden werden muss.

Auch beim Lösen dieser Stellung ergeben sich dann wiederum keine Probleme durch eine axiale Druckeinwirkung des Mediums auf den Steuerring 3, da der Steuerschieber 2 druckunabhängig verstellt werden kann, wobei bereits nach einem kurzen Verschiebeweg die Verbindungsöffnung 22 freigelegt wird und somit ein Druckabbau erfolgt.

Im Rahmen der Erfindung ist es selbstverständlich auch möglich, anstelle eines Handhebels 41 eine andere Betätigungsart für den Steuerschieber vorzusehen. Es wäre durchaus denkbar, die Betätigung des Steuerschiebers 2 durch andere mechanische Mittel oder auch hydraulisch, pneumatisch oder elektrisch bzw. elektromagnetisch durchzuführen, wobei dann selbstverständlich die Feder 29 nicht unbedingt benötigt wird.

In der vorstehenden Beschreibung wurde erwähnt, dass das Gehäuse insofern zweiteilig ausgeführt ist, als ein Grundkörper 4 und ein Einsatz 5 vorgesehen sind. Selbstverständlich besteht auch die Möglichkeit, dieses Gehäuse in axialer Richtung gesehen aus zwei Abschnitten herzustellen, welche dann durch achsparallel verlaufende Schrauben miteinander verbunden werden. Auch wäre es möglich, eine Gewindeverbindung vorzusehen, indem nämlich in dem einen Gehäuseteil eine Gewindebohrung und an dem anderen Gehäuseteil ein Gewindering vorgesehen wird. Bei einer solchen Ausgestaltung könnten eine Reihe von Ringkanälen weggelassen werden, welche zur Abdichtung zwischen einem Grundkörper 4 und einem Einsatz 5 vorgesehen werden müssen. Es wäre daher lediglich der Steuerschieber an seinen beiden Ausgangsenden entsprechend abzudichten.

Beim gezeigten Ausführungsbeispiel sind die Verbindungsöffnungen 22 und 23 als unmittelbar an die Ventilsitze 20 und 21 anschliessend angeordnete Radialbohrungen ausgeführt, wobei diese Bohrungen spitzwinklig zum anschlussseitigen Ende des Kanals 24 geneigt sind, um dadurch bessere Strömungsbedingungen zu erreichen. Selbstverständlich besteht auch die Möglichkeit, anstelle der einzelnen Verbindungsöffnungen 22 und 23 zwischen den Ventilsitzen 20 und 21 durchgehende Schlitze vorzusehen. Auch wäre es möglich, an der Innenbegrenzungsfläche des Steuerringes 3 oder an der Oberfläche des Abschnittes 28 des Steuerschiebers 2 Nuten vorzusehen, die dann gegebenenfalls durch zusätzliche Anordnung eines Ringkanals über entsprechende Verbindungsöffnungen mit dem Kanal 24 in Verbindung stehen. In allen diesen Fällen besteht die Möglichkeit, unmittelbar nach dem Wegbewegen eines Ventilsitzes 20 und 21 von der entsprechenden Passfläche 33 oder 34 des Steuerringes 3 eine Verbindungsöffnung zum Kanal 24 zu schaffen. Ausserdem ist dann der jeweils gegenüberliegenden Seite eine genügende Durchtrittsmöglichkeit für die Rückführung des drucklosen Mediums gegeben.

Selbstverständlich sind im Rahmen der Erfindung noch weitere konstruktive Änderungen möglich, wobei jedoch stets sowohl am Steuerschieber 2 als auch an der Gehäusebohrung 10 zwei mit Abstand voneinander angeordnete Ventilsitze vorzusehen sind sowie ein auf dem Steuerschieber 2 in axialer Richtung verschiebbarer Steuerring. Selbstverständlich ist die Zuführung der einzelnen Anschlussleitungen durch die erfindungsgemässe Konstruktion entsprechend bedingt.

Im Ventilgehäuse 1 können verschiedene andere Möglichkeiten integriert werden, wobei gerade durch diese Massnahmen die Einsatzmöglichkeiten des erfindungsgemässen Hydrauliksteuergerätes noch erhöht bzw. verbessert werden können. Es ist zum Beispiel möglich, in dem Ventilgehäuse 1 zwischen den Anschlussleitungen A und B zu den Verbrauchern und/oder der Anschlussleitung P zur Zufuhr des Druckmediums und der Rücklaufanschlussleitung T zum Vorratstank Druckreduzierventile einzusetzen. Dies ist insbesondere dann von Vorteil, wenn in den beiden Anschlussleitungen A und B verschiedene Drücke benötigt werden. So wäre es möglich, zum Beispiel durch eine angeordnete Pumpe das Druckmedium mit einem Druck von 1 000 bar anzufördern, wobei in Richtung des einen Druckkreises eine Druckreduzierung auf 800 bar und in Richtung des anderen Druckkreises eine Druckreduzierung auf 300 bar erfolgt. Solche Druckbegrenzungsventile können fix eingestellt oder aber auch variabel eingestellt werden.

Ferner kann den Anschlussleitungen A und B ein entsperrbares Doppelrückschlagventil zugeordnet werden, wobei durch Druckaufbau in der einen Anschlussleitung A bzw. B das Rückschlagventil der jeweils anderen Anschlussleitung B bzw. A entsperrbar ist. Die sich hier ergebenden Schaltstellungen und Durchlaufwege können der schematischen Darstellung nach Fig. 4a entnommen werden. Dies kann beispielsweise durch einen doppeltwirkenden Kolben erreicht werden, der mit seinen abstehenden Fühlern jeweils das auf der drucklosen Seite vorgesehene Rückschlagventil öffnet. Dadurch kann der Anwendungsbereich des Hydrauliksteuergerätes wesentlich erweitert werden, da dadurch eine positive Überdeckung der beiden Ventilstellungen gegeben ist. Es ist daher in der Mittelstellung nicht mehr ein kompletter Druckausgleich gegeben, was gerade dann bei Hydraulikantrieben oder bei Hebezeugen sehr wesentlich ist.

Aus Fig. 6 ist eine Ausführungsform des Hydrauliksteuergerätes ersichtlich, bei welchem an das Gehäuse 1 ein Pumpengehäuse 46 angeschlossen ist. Durch die besondere Bauart des Hydrauliksteuergerätes ist es möglich, ein solches Pumpengehäuse 46 direkt anzuflanschen, da die Anschlussleitungen für die Zufuhr des Druckmediums und die Ablaufleitung zu einem Vorratstank an den entsprechend gewünschten Stellen vorgesehen werden können. An dem Pumpengehäuse 46 sind dann korrespondierende Anschlussleitungen D und E vorgesehen. Es muss daher beim Anflanschen eines solchen Pumpengehäuses lediglich eine entsprechende Abdichtung eingesetzt werden, worauf dann nach Anziehen der Befestigungsschrauben eine dichte Verbindung ohne Zwischenleitung gegeben ist.

Den Fig. 7 bis 11 kann ein solches Pumpengehäuse entnommen werden, wobei ersichtlich ist, dass dieses Pumpengehäuse in einfacher konstruktiver Ausführung als einstückiger Metallblock ausgeführt ist, wobei lediglich entsprechende Bohrungen vorzusehen sind. Einerseits ist dies eine Bohrung 47 für den Pumpenstössel 48 und andererseits sind dies quer zu dieser Bohrung 47 verlaufende Bohrungen 49, 50 und 51 für die Anschlussleitungen sowie für Rückschlagventile 60 und 61. Allein durch Anfertigung verschiedener Bohrungen kann also ein Pumpengehäuse 46 geschaffen werden, das in einfacher Weise an ein Hydrauliksteuergerät angeflanscht werden kann. In diesem Pumpengehäuse ist ferner noch eine Gewindebohrung 52 eingesetzt, in welche ein Lagerkörper 53 eingeschraubt werden kann. Dieser Lagerkörper 53 dient zur drehbaren Aufnahme eines Handhebels 54, welcher über ein Kuppelglied 55 und einen Bolzen 56 mit dem Pumpenstössel 48 verbunden ist.

Die Ventilkörper im Pumpengehäuse 46 können in einfacher Weise als federbelastete Kugelrückschlagventile 60, 61 ausgeführt werden. Sowohl das in der Ansaugleitung vorgesehene Rückschlagventil 61 als auch das als Auslassventil wirkende Rückschlagventil 60 sind als Kugelsitzventile ausgebildet, wobei beim Rückschlagventil 61 der eingesetzte Ventilsitz 62 lose eingesetzt ist, wobei eine Abdichtung durch einen Dichtring 63 erfolgt. Nach dem Zusammenschrauben mit dem Ventilkörper kann dieser Ventilsitz 62 nicht mehr aus der Bohrung 49 herausdringen. Beim Rückschlagventil 60 ist zum Abstützen der Feder 64 ein Bolzen 65 vorgesehen, welcher mittels eines Dichtringes 66 gegenüber der Bohrung 51 abgedichtet ist. In eine Querbohrung 67 dieses Bolzens 65 wird durch die Bohrung 68 ein Verriegelungsstift eingeführt.

Am Ventilgehäuse 1 können ferner jeweils zwei Anschlussleitungen P und T für die Zufuhr von Druckmedium und für den Ablauf in den Vorratstank vorgesehen werden, wobei an die einen Anschlussleitungen das Pumpengehäuse 46 für die Handbetätigung und an die anderen Anschlussleitungen P, T eine motorisch betriebene Pumpe angeschlossen werden kann. In Fig. 6 sind noch zwei Schraubenköpfe 57 und 58 dargestellt, welche zum Einstellen von Druckreduzierventilen oder beispielsweise Überdruckventilen in das Ventilgehäuse 1 eingesetzt werden können.

Durch die erfindungsgemässe Konstruktion konnte also ein Hydrauliksteuergerät geschaffen werden, welches gegenüber bisher bekannten wesentlich bessere, sicherere und grössere Anwendungsmöglichkeiten mit sich bringt.

Obwohl in der Beschreibung von einem Hydrauliksteuergerät die Rede ist, könnten die erfindungsgemässen Konstruktionen in gleicher Weise für pneumatische Steuergeräte eingesetzt werden.

**Patentansprüche**

1. Hydrauliksteuergerät mit einem Gehäuse (1) und einem in einer Gehäusebohrung (10) verschiebbaren Steuerschieber (2), wobei in der Gehäusebohrung (10) mit axialem Abstand zueinander zwei Ventilsitze (11, 12) ausgebildet sind, sowie mehreren in Abhängigkeit von der Stellung des Steuerschiebers (2) miteinander verbindbaren oder gegenseitig absperrbaren Anschlussleitungen (A, P, B, T), wobei in einem zwischen einem Abschnitt der Gehäusebohrung (10) und dem Steuerschieber (2) gebildeten ringförmigen Raum (35) ein koaxial zum Steuerschieber (2) angeordneter und an diesem verschiebbar geführter Steuerring (3) vorgesehen ist, welcher an seinen Endbereichen Passflächen (31, 32) zu den Ventilsitzen (11, 12) an der Gehäusebohrung (1O) aufweist, und wobei am Steuerschieber (2) zwei mit axialem Abstand zueinander ausgebildete Ventilsitze (20, 21) vorgesehen sind und der Steuerring (3) an seinen Endbereichen Passflächen (33, 34) zu diesen Steuerschieber-Ventilsitzen (20, 21) aufweist, wobei ferner zwischen den beiden Steuerschieber-Ventilsitzen (20, 21) unmittelbar an die Ventilsitze (20, 21) anschliessende und zu einem axial im Steuerschieber (2) verlaufenden Kanal (24) geführte Verbindungsöffnungen (22, 23) vorgesehen sind, und je eine Anschlussleitung (A, P, B, T) in den Ringraum (35) zwischen den beiden Ventilsitzen (11, 12) in der Gehäusebohrung (10) und beidseitig ausserhalb dieser Ventilsitze (11, 12) in Ringräume (38, 45) zwischen der Gehäusebohrung (10) und dem Steuerschieber (2) sowie zu dem Kanal (24) im Steuerschieber (2) einmündet, dadurch gekennzeichnet, dass der Steuerring (3) an seinen Endbereichen äussere kegelförmige Passflächen (31, 32) und innere trichterförmige Passflächen (33, 34) aufweist, dass die äusseren Passflächen (31, 32) flächenmässig grösser sind als die inneren Passflächen (33, 34) am Steuerring (3), dass der Abstand der Ventilsitze (20, 21) am Steuerschieber (2) grösser ist als der Abstand der Ventilsitze (11, 12) in der Gehäusebohrung (10), wobei die Länge des Steuerringes (3) kleiner ist als der Abstand der beiden Ventilsitze (20, 21) am Steuerschieber (2), dass die Ventilsitze (11, 12), (20, 21) an der Gehäusebohrung (10) und am Steuerschieber (2) von in axialer Richtung verlaufenden Zylinderflächen und Radialebenen (13, 14) begrenzt sind, und dass zwischen den beiden Steuerschieber-Ventilsitzen (20, 21) unmittelbar an die Ventilsitze (20, 21) im Verschiebebereich des Steuerringes (3) anschliessende und zu dem axial zum im Steuerschieber verlaufenden Kanal (24) geführte Verbindungsöffnungen (22, 23) vorgesehen sind.

2. Hydrauliksteuergerät nach Anspruch 1, dadurch gekennzeichnet, dass die Verbindungsöffnungen (22, 23) im Steuerschieber (2) als unmittelbar an die Ventilsitze (20, 21) anschliessend zwischen den beiden Ventilsitzen (20, 21) angeordnete Radialbohrungen ausgeführt sind.

3. Hydrauliksteuergerät nach den Ansprüchen 1 und 2, dadurch gekennzeichnet, dass die als Bohrungen ausgebildeten Verbindungsöffnungen (22, 23) spitzwinklig zum anschlussleitungsseitigen Ende des Kanals (24) geneigt sind.

4. Hydrauliksteuergerät nach den Ansprüchen 1 und 2, dadurch gekennzeichnet, dass die Verbindungsöffnungen im Steuerschieber (2) als zwischen den beiden Ventilsitzen (20, 21) durchgehende Schlitze ausgebildet sind.

5. Hydrauliksteuergerät nach den Ansprüchen 1 und 2, dadurch gekennzeichnet, dass die Verbindungsöffnungen im Steuerschieber durch zwischen den Ventilsitzen (20, 21) am Steuerschieber (2) oder an der Innenbohrung des Steuerringes (3) vorgesehene Längsnuten und zwischen den Ventilsitzen (20, 21) am Steuerschieber (2) vorgesehene Bohrungen zum Kanal (24) gebildet sind.

6. Hydrauliksteuergerät nach den Ansprüchen 1 bis 5, dadurch gekennzeichnet, dass der an einem Ende des Steuerschiebers (2) offene Kanal (24) in einen durch eine Gehäusebohrung gebildeten Raum (25) mündet, und in diesem Raum (25) eine Feder (29) zur axialen Belastung des Steuerschiebers (2) vorgesehen ist.

7. Hydrauliksteuergerät nach den Ansprüchen 1 bis 6, dadurch gekennzeichnet, dass der Steuerschieber (2) aus zwei in axialer Richtung aufeinander folgenden, miteinander fest verbundenen Bauteilen (26, 27) gebildet ist, wobei jeder Bauteil (26, 27) einen der beiden Ventilsitze (20, 21) aufweist.

8. Hydrauliksteuergerät nach Anspruch 1 und einem der vorhergehenden Ansprüche, dadurch gekennzeichnet, dass das Gehäuse (1) zweiteilig ausgeführt ist, wobei ein Teil der Gehäusebohrung (10) von einem rohrförmigen Einsatz (5) gebildet ist, und dass dieser Einsatz (5) den einen Ventilsitz (12) und der als Grundkörper (4) ausgebildete Gehäuseteil den anderen Ventilsitz (11) aufweist.

9. Hydrauliksteuergerät nach Anspruch 8, dadurch gekennzeichnet, dass der Ventilsitz am Grundkörper (4) des Gehäuses (1) einen grösseren Durchmesser aufweist als der Ventilsitz (12) am Einsatz (5) des Gehäuses (1).

10. Hydrauliksteuergerät nach Anspruch 1 und einem der vorhergehenden Ansprüche, dadurch gekennzeichnet, dass in dem Ventilgehäuse (1) zwischen den Anschlussleitungen (A, B) zu den Verbrauchern und/oder der Anschlussleitung (P) zur Zufuhr des Druckmediums und der Rücklaufanschlussleitung (T) zum Vorratstank Druckreduzierventile integriert sind.

11. Hydrauliksteuergerät nach Anspruch 1 und einem der vorhergehenden Ansprüche, dadurch gekennzeichnet, dass den Anschlussleitungen (A, B) ein entsperrbares Doppelrückschlagventil zugeordnet ist, wobei durch Druckaufbau in der einen Anschlussleitung (A, B) das Rückschlagventil der jeweils anderen Anschlussleitung (A, B) entsperrbar ist.

12. Hydrauliksteuergerät nach Anspruch 1 und einem der vorhergehenden Ansprüche, dadurch gekennzeichnet, dass die an die Ventilsitze (20, 21) anschliessenden Bereiche des Steuerschiebers (2) zumindest über einen kurzen Abschnitt sich konisch zum jeweiligen Ende des Steuerschiebers (2) hin verjüngen, wobei der Durchmesserunterschied auf eine Länge von z.B. 1 cm annähernd 0,1 mm beträgt.

13. Hydrauliksteuergerät nach Anspruch 1 und einem der vorhergehenden Ansprüche, dadurch gekennzeichnet, dass an dem unmittelbar an einen oder an beide Ventilsitz(e) (20, 21) anschliessende Bereich des Steuerschiebers (2) ein Bund mit gegenüber dem Steuerschieber (2) geringfügig grösseren Durchmesser anschliesst.

14. Hydrauliksteuergerät nach Anspruch 1 und einem der vorhergehenden Ansprüche, dadurch gekennzeichnet, dass an die Anschlussleitungen (P, T) für die Zufuhr des Druckmediums und die Ablaufleitung zu einem Vorratstank direkt ein Pumpengehäuse (46) angeschlossen ist.

15. Hydrauliksteuergerät nach Anspruch 14, dadurch gekennzeichnet, dass das Pumpengehäuse (46) plan mit dem Ventilgehäuse (1) verschraubt ist, wobei die Anschlussleitungen (P, T) des Ventilgehäuses (1) direkt mit der Ansaugleitung (E) bzw. der Druckleitung (D) des Pumpengehäuses (46) übereinstimmen.

16. Hydrauliksteuergerät nach den Ansprüchen 14 und 15, dadurch gekennzeichnet, dass das Pumpengehäuse (46) als einstückiger Metallblock mit einer Bohrung (47) für den Pumpenstössel (48) und quer dazu verlaufenden Bohrungen (49, 50, 51) für die Anschlussleitungen (D, E) und die Ventilkörper ausgebildet ist.

17. Hydrauliksteuergerät nach den Ansprüchen 14 bis 16, dadurch gekennzeichnet, dass die Ventilkörper im Pumpengehäuse (46) als federbelastete Kugelrückschlagventile ausgeführt sind.

18. Hydrauliksteuergerät nach Anspruch 1 und einem der vorhergehenden Ansprüche, dadurch gekennzeichnet, dass am Ventilgehäuse (1) jeweils zwei Anschlussleitungen (P, T) für die Zufuhr von Druckmedium und für den Ablauf in den Vorratstank vorgesehen sind, wobei an die einen Anschlussleitungen (P, T) ein Pumpengehäuse (46) für Handbetätigung und an die anderen Anschlussleitungen (P, T) eine motorisch betriebene Pumpe angeschlossen sind.

**Revendications**

1. Appareil de commande hydraulique comportant un boîtier (1) et un tiroir de distribution (2) coulissant dans un alésage (10) du boîtier, deux sièges de soupape (11, 12) se trouvant dans l'alésage du boîtier avec un écartement axial l'un par rapport à l'autre, ainsi que plusieurs conduits de distribution (A, P, B, T) qui peuvent être mis en communication les uns avec les autres ou qui peuvent être obturés les uns par rapport aux autres en fonction de la position du tiroir de distribution (2), une bague de distribution (3) disposée de façon coaxiale par rapport au tiroir de distribution (2) et pouvant coulisser sur celui-ci étant prévue dans une chambre annulaire (35) et ménagée entre un tronçon de l'alésage (10) du boîtier et le tiroir de distribution (2), bague qui présente à ses extrémités des faces ajustées (31, 32) aux sièges de soupape (11, 12) de l'alésage (10) du boîtier, et deux sièges de soupape (20, 21), placés avec un écartement axial l'un par rapport à l'autre, étant prévus sur le tiroir de distribution (2), et la bague de distribution (3) présentant à ses extrémités des faces ajustées (33, 34) à ces sièges de soupape du tiroir de distribution (20, 21), des orifices de raccordement (22, 23), ménagés immédiatement après les sièges de soupape (20, 21) et donnant sur un conduit (24) s'étendant de façon axiale dans le tiroir de distribution (2), étant prévus en outre entre les deux sièges de soupape (20, 21) du tiroir de distribution, et chacun faisant déboucher un conduit de distribution (A, P, B, T) dans la chambre annulaire (35) entre les deux sièges de soupape (11, 12) dans l'alésage (10) du boîtier et des deux côtés au-delà de ces deux sièges de soupape (11, 12) dans les chambres annulaires (38, 45) entre l'alésage (10) du boîtier et le tiroir de distribution (2) ainsi que vers le conduit (24) dans le tiroir de distribution (2), caractérisé en ce que la bague de distribution (3) présente à ses extrémités des faces ajustées externes coniques (31, 32) et des faces ajustées internes en forme d'entonnoir (33, 34), en ce que les faces ajustées externes (31, 32) ont une surface plus grande que les faces ajustées internes (33, 34) sur la bague de distribution (3), en ce que l'écartement des sièges de soupape (20, 21) sur le tiroir de distribution (2) est plus grande que l'écartement des sièges de soupape (11, 12) dans l'alésage (10) du boîtier, la longueur de la bague de distribution (3) étant plus petite que la distance entre les deux sièges de soupape (20, 21) sur le tiroir de distribution (2), en ce que les sièges de soupape (11, 12), (20, 21) sont limités sur l'alésage (10) du boîtier et sur le tiroir de distribution (2) par des plans radiaux et des faces cylindriques se développant en direction axiale (13, 14), et en ce que des orifices de raccordement (22, 23) ménagés immédiatement après les sièges de soupape (20, 21) dans la zone de coulissement de la bague de distribution (3) et conduisant au conduit (24) qui s'étend de façon axaile dans le tiroir de distribution, sont prévus entre les deux sièges de soupape (20, 21) du tiroir de distribution.

2. Appareil de commande hydraulique selon la revendication 1, caractérisé en ce que les orifices de raccordement (22, 23) dans le tiroir de distribution (2) sont pratiqués sous forme de perforations radiales disposées immédiatement à la suite des sièges de soupape (20, 21) entre les deux sièges de soupape (20, 21).

3. Appareil de commande hydraulique selon les revendications 1 et 2, caractérisé en ce que les orifices de raccordement (22, 23) qui se trouvent sous la forme de perforations sont inclinés à angle aigu vers l'extrémité du conduit (24) qui se trouve du côté des conduits de distribution.

4. Appareil de commande hydraulique selon les revendications 1 et 2, caractérisé en ce que les orifices de raccordement dans le tiroir de distribution (2) se trouvent sous forme de fentes continues entre les deux sièges de soupape (20, 21).

5. Appareil de commande hydraulique selon les revendications 1 et 2, caractérisé en ce que les orifices de raccordement dans le tiroir de distribution sont formés pour aboutir au conduit (24) par des rainures longitudinales prévues entre les sièges de soupape (20, 21) sur le tiroir de distribution (2) ou sur la cavité interne de la bague de distribution (3) et par des perforations prévues entre les sièges de soupape (20, 21) sur le tiroir de distribution (2).

6. Appareil de commande hydraulique selon les revendications 1 à 5, caractérisé en ce que le conduit (24) ouvert à une extrémité du tiroir de distribution (2) débouche dans une chambre (25) formée par un alésage du boîtier, et dans cette chambre (25) est prévu un ressort (29) pour la poussée axiale du tiroir de distribution (2).

7. Appareil de commande hydraulique selon les revendications 1 à 6, caractérisé en ce que le tiroir de distribution (2) est constitué de deux pièces de construction (26, 27) solidement fixées l'une à l'autre, se faisant suite en direction axiale, chaque pièce de construction (26, 27) présentant un des deux sièges de soupape (20, 21).

8. Appareil de commande hydraulique selon la revendication 1 et l'une des revendications précédentes, caractérisé en ce que le boîtier (1) est fait de deux parties, une partie de l'alésage (10) du boîtier étant constituée d'une pièce insérée tubulaire (5), et que cette pièce insérée (5) présente le siège de soupape (12) et la partie du boîtier qui se trouve en tant que corps principal (4) présente l'autre siège de soupape (11).

9. Appareil de commande hydraulique selon la revendication 8, caractérisé en ce que le siège de soupape sur le corps principal (4) du boîtier (1) présente un diamètre supérieur à celui du siège de soupape (12) sur la pièce insérée (5) du boîtier (1).

10. Appareil de commande hydraulique selon la revendication 1 et l'une des revendications précédentes, caractérisé en ce que dans le boîtier à soupapes (1) sont intégrées des soupapes d'étranglement entre les conduits de distribution (A, B) conduisant aux dispositifs utilisateurs et/ou le conduit de distribution (P) pour l'arrivée du liquide sous pression et le conduit de distribution de retour (T) aboutissant au réservoir de stockage.

11. Appareil de commande hydraulique selon la revendication 1 et l'une des revendications précédentes, caractérisé en ce qu'une double soupape antiretour susceptible d'être fermée est disposée sur les conduits de distribution (A, B), ce par quoi, par augmentation de la pression dans l'un des conduits de distribution (A, B), la soupape anti-retour de l'autre conduit de distribution respectif (A, B) est susceptible d'être fermée.

12. Appareil de commande hydraulique selon la revendication 1 et l'une des revendications précédentes, caractérisé en ce que les parties du tiroir de distribution (2) qui font suite aux sièges de soupape (20, 21) se rétrécissent en forme conique au moins sur un court tronçon vers l'extrémité respective du tiroir de distribution (2), la différence de diamètre s'élevant approximativement à 0,1 mm sur une longueur d'un cm par exemple.

13. Appareil de commande hydraulique selon la revendication 1 et l'une des revendications précédentes, caractérisé en ce qu'un joint ayant un diamètre légèrement plus grand par rapport au tiroir de distribution (2) fait suite à la partie du tiroir de distribution (2) qui se trouve immédiatement après un ou les deux sièges de soupape (20, 21).

14. Appareil de commande hydraulique selon la revendication 1 et l'une des revendications précédentes, caractérisé en ce qu'un corps de pompe (46) est directement raccordé aux conduits de distribution (P, T) pour l'arrivée du liquide sous pression et l'évacuation vers un réservoir de stockage.

15. Appareil de commande hydraulique selon la revendication 14, caractérisé en ce que le corps de pompe (46) est assemblé en plan au boîtier à soupapes (1) par vissage, les conduits de distribution (P, T) du boîtier à soupapes (1) correspondant directement avec le conduit d'aspiration (E) ou, respectivement, au conduit de refoulement (D) du corps de pompe (46).

16. Appareil de commande hydraulique selon les revendications 14 et 15, caractérisé en ce que le corps de pompe (46) se trouve sous la forme de bloc de métal coulé d'une seule pièce comportant un alésage (47) pour la tige-poussoir (48) de la pompe et des orifices (49, 50, 51) disposés perpendiculairement à celui-ci, pour les conduits de distribution (D, E) et les corps de soupape.

17. Appareil de commande hydraulique selon les revendications 14 à 16, caractérisé en ce que les corps de soupapes dans le corps de pompe (46) sont réalisés sous forme de soupapes anti-retour à billes commandées par ressort.

18. Appareil de commande hydraulique selon la revendication 1 et l'une des revendications précédentes, caractérisé en ce que deux conduits de distribution (P, T) sont prévus sur le boîtier à soupapes (1), respectivement, pour l'arrivée du liquide sous pression, et pour l'évacuation dans le réservoir, un corps de pompe (46) manœuvrable à main étant raccordé à certains conduits de distribution (P, T) et une pompe actionnée par un moteur étant raccordée aux autres conduits de distribution (P, T).

## Claims

1. Hydraulic control valve having a housing (1) and a control slide valve (2), which is displaceable in a housing bore (10), two valve seats (11, 12) being formed in the housing bore (10) at an axial distance from one another, and a plurality of connection lines (A, P, B, T), which may be connected to one another or reciprocally blocked in dependence upon the position of the control slide valve (2), a control ring (3) which is arranged coaxially relative to the control slide valve (2), and which is displaceably guided on the said control slide valve being provided in an annular chamber (35), which is formed between a section of the housing bore (10) and the control slide valve (2), which control ring comprises, at its end regions, fitting surfaces (31, 32) for the valve seats (11, 12) on the housing bore (10), and two valve seats (20, 21) arranged at an axial distance from one another being provided on the control slide valve (2), and the control ring (3) comprises, at its end regions, fitting surfaces (33, 34) for the said seats (20, 21) for the control slide valve, connection openings (22, 23) being provided in addition between the two seats (20, 21) of the control slide valve and being directly connected to the valve seats (20, 21) and leading to a duct (24), which extends axially in the control slide valve, and a connection line (A, P, B, T) opens in each case into the annular chamber (35) between the two valve seats (11, 12) in the housing bore (10), and on both sides outside the said valve seats (11, 12) into annular chambers (38, 45) between the housing bore (10) and the control slide valve (2), and into the duct (24) in the control slide valve (2), characterised in that, at its end regions, the control ring (3) comprises outer bevelled fitting surfaces (31, 32) and inner funnel-shaped fitting surfaces (33, 34), the outer fitting surfaces (31, 32) have a larger surface area than the inner fitting surfaces (33, 34) on the control ring (3), the distance between the valve seats (20, 21) on the control slide valve (2) is greater than the distance between the valve seats (11, 12) in the housing bore (10), the length of the control ring (3) being smaller than the distance between the two valve seats (20, 21) on the control slide valve (2), the valve seats (11, 12), (20, 21) on the housing bore (10) and on the control slide valve (2) are defined by cylindrical surfaces and radial planes (13, 14) extending in an axial direction, and connection openings (22, 23) are provided between the two seats (20, 21) of the control slide valve, which connection openings are directly connected to the valve seats (20, 21) in the displacement area of the control ring (3) and which lead to the duct (24) extending axially in the control slide valve.

2. Hydraulic control valve according to claim 1, characterised in that the connection openings (22, 23) are formed in the control slide valve (2) as radial bores, which are arranged between the two valve seats (20, 21) and which are directly connected to the valve seats (20, 21).

3. Hydraulic control valve according to claims 1 and 2, characterised in that the connection openings (22, 23) formed as bores are acute-angled relative to the end of the duct (24) which is on the side of the connection lines.

4. Hydraulic control valve according to claims 1 and 2, characterised in that the connection openings in the control slide valve (2) are formed as through slots between the two valve seats (20, 21).

5. Hydraulic control valve according to claims 1 and 2, characterised in that the connection openings in the control slide valve (2) are formed by longitudinal grooves provided between the valve seats (20, 21) on the control slide valve (2) or on the inner bore of the control ring (3), and bores, which lead to the duct (24) and which are provided between the valve seats (20, 21) on the control slide valve (2).

6. Hydraulic control valve according to claims 1 to 5, characterised in that the duct (24), which is open at one end of the control slide valve (2), opens into a chamber (25) formed by a housing bore, and a spring (29) for axially loading the control slide valve (2) is provided in the said chamber (25).

7. Hydraulic control valve according to claims 1 to 6, characterised in that the control slide valve (2) is formed by two component parts (26, 27), which are consecutive in an axial direction, and which are securely connected to one another, each component part (26, 27) comprising one of the two valve seats (20, 21).

8. Hydraulic control valve according to claim 1 and any one of the preceding claims, characterised in that the housing (1) is formed in two parts, one part of the housing bore (10) being formed by a tube-shaped insert (5), and the said insert (5) comprises one valve seat (12) and the housing part of the other valve seat (11), which part is formed as a basic body (4).

9. Hydraulic control valve according to claim 8, characterised in that the valve seat on the basic body (4) of the housing (1) has a larger diameter than the valve seat (12) on the insert (5) of the housing (1).

10. Hydraulic control valve according to claim 1 and any one of the preceding claims, characterised in that pressure reducing valves are integrated in the valve housing (1) between the connection lines (A, B) to the comsuming devices and/or the connection line (P) for the supply of the pressure medium and the return connection line (T) to the storage tank.

11. Hydraulic control valve according to claim 1 and any one of the preceding claims, characterised in that a double reversing valve, which may be opened, is associated with the connection lines (A, B), the reversing valve of one connection line (A, B) being opened as a result of a build up of pressure in the other connection line (A, B) in each case.

12. Hydraulic control valve according to claim 1 and any one of the preceding claims, characterised in that regions of the control slide valve (2), which are connected to the valve seats (20, 21), taper, at least over a short section, in the direction of the respective end of the control slide valve (2), the difference in the diameters over a length of, e.g., 1 cm being approximately 0.1 mm.

13. Hydraulic control valve according to claim 1 and any one of the preceding claims, characterised in that a shoulder, having a slightly larger diameter than the control slide valve (2), is connected to the region of the control slide valve (2) which is directly connected to one, or both, valve seat(s) (20, 21).

14. Hydraulic control valve according to claim 1 and any one of the preceding claims, characterised in that a pump housing (46) is directly connected to the connection lines (P, T) for the supply of the pressure medium and the return line to a storage tank.

15. Hydraulic control valve according to claim 14, characterised in that the pump housing (46) is screwed flat onto the valve housing (1), the connection lines (P, T) of the valve housing (1) corresponding directly with the suction line (E) or the pressure line (D) of the pump housing (46).

16. Hydraulic control valve according to claims 14 and 15, characterised in that the pump housing (46) is formed as a one-piece metal block having a bore (47) for the pump push rod (48), and bores (49, 50, 51) extending transversely to the first bore (47) for the connection lines (D, E) and the valve bodies.

17. Hydraulic control valve according to claims 14 to 16, characterised in that the valve body in the pump housing (46) is formed as a springloaded ball retaining valve.

18. Hydraulic control valve according to claim 1 and any one of the preceding claims, characterised in that, two connection lines (P, T) are provided in each case on the valve housing (1) for the supply of pressure medium and for the return to the storage tank, a pump housing (46) being connected to one connection line (P, T) for manual operation and a motor-driven pump being connected to the other connection line (P, T).

Fig. 1

Fig. 2

Fig. 3

Fig. 5

3 / 4

Fig.4

Fig. 4a

Fig. 6

4 / 4

Fig. 7

Fig. 10

Fig. 8

Fig. 11

Fig. 9